# EUROPÄISCHE PATENTSCHRIFT

(11) **EP 1 904 679 B1**
(45) Veröffentlichungstag und Bekanntmachung des Hinweises auf die Patenterteilung: **28.09.2011**
(21) Anmeldenummer: 06777459.6
(22) Anmeldetag: 26.06.2006
(51) Int. Cl.: D06L 1/12, C08J 11/06

(54) **ENTFERNEN DER SILIKONBESCHICHTUNG VON BESCHICHTETEN GEWEBEN UND AIRBAGS**
REMOVING THE SILICONE COATING FROM COATED FABRICS AND AIRBAGS
ELIMINATION DU REVETEMENT SILICONE DE TISSUS ENDUITS ET DE COUSSINS GONFLABLES

(30) Priorität: 15.07.2005 DE 102005033063
(43) Veröffentlichungstag der Anmeldung: 02.04.2008
(73) Patentinhaber: CHT R. BEITLICH GmbH, 72072 Tübingen (DE)
(72) Erfinder: NICKEL, Friedhelm, 72072 Tübingen (DE); HILTON, Douglas Malcom, Manchester M30 9AG (GB)
(74) Vertreter: von Kreisler Selting Werner
(86) Internationale Anmeldenummer: PCT/EP2006/063528
(87) Internationale Veröffentlichungsnummer: WO 2007/009856

(56) Entgegenhaltungen:
- DE-A1- 2 901 698
- DE-C1- 3 515 077
- PATENT ABSTRACTS OF JAPAN Bd. 2000, Nr. 24, 11. Mai 2001 (2001-05-11) & JP 2001 180413 A (TAKATA CORP), 3. Juli 2001 (2001-07-03)
- DATABASE WPI Week 198030 Derwent Publications Ltd., London, GB; AN 1980-52342C XP002399415 & JP 55 076160 A (MEISEI KAGAKU KOGYO KK) 9. Juni 1980 (1980-06-09)

## Beschreibung

Die Erfindung betrifft ein Verfahren zum Entfernen von auf Fasern, Garnen oder flächigen textilen Materialien befindlichen Silikonen, insbesondere zur Wiedergewinnung und Wiederverwertung (Recycling) von Fasermaterial aus der Airbagproduktion.

Silikone werden in immer größerem Ausmaß zur Oberflächenbehandlung von Fasern, Garnen oder flächigen textilen Materialien eingesetzt. Dabei werden die Silikone insbesondere zur Hydrophobierung von Textilien verwendet. Die mit Silikonen behandelte Ware erhält dabei häufig einen weichen und geschmeidigen Griff. Behandelt man Garne mit Silikonen, insbesondere Silikonölen, wird die Faser/Metall-Reibung herabgesetzt.

Als Silikone werden die flüssigen bis pastösen kettenförmigen Dialkylpolysiloxane, insbesondere Dimethylpolysiloxane, die auf der Faser fixierbaren Methylwasserstoffpolysiloxane sowie auf der Faser auskondensierbare Silikonharze, welche tri- oder tetrafunktionelle Siliciumeinheiten enthalten, verwendet.

Von besonderem Vorteil ist dabei, dass die Organosilikone sich nur schwer von der Faser wieder entfernen lassen, so dass die Silikonimprägnierung wasch- und reinigungsfest ist. Diese erwünschte Eigenschaft kann jedoch sehr stören, wenn ein Abziehen der Siliconimprägnierung bei Fehlchargen in der Praxis erforderlich wird: In "Chemie und Technologie der Silikone" von Walter Noll, Verlag Chemie GmbH, 2. Auflage, 1968, Seite 512, wird angegeben, dass man den Silikonfilm in der Hitze sauer zersetzen soll, wobei eine Kombination mit lösungsmittelhaltigen Waschmitteln vorgesehen werden kann. Es ist verständlich, dass ein derart aggressives Vorgehen häufig zur Schädigung der Fasern führen kann.

Die EP 0 950 684 B1 beschreibt ein Verfahren zur Wiederaufbereitung von siliciumharzhaltigen Polyamidmaterial unter Verwendung einer 5 bis 50 Gew.-%igen Alkalihydoxidlösung.

Es ist aus der DE 35 15 077 C1 bekannt, eine Silikonimprägnierung von textilen Materialien dadurch zu entfernen, dass man die textilen Materialien mit wässrigen Zubereitungen behandelt, welche waschaktive Substanzen, Oxalsäure und Soda enthalten. Diese Arbeitsweise ist zwar etwas schonender, sie gestattet aber auch nicht die vollständige Entfernung der Silikone von den textilen Oberflächen und versagt insbesondere dann, wenn die Silikone zu Produkten mit hohem Molekulargewicht vernetzt sind.

Aus dieser Druckschrift ist auch bereits ein Verfahren zum Entfernen von auf Fasern, Garnen oder flächigen textilen Materialien befindlichen Silikonen bekannt, das sich dadurch auszeichnet, das man wässrige Zubereitungen bei gegebenenfalls erhöhten Temperaturen einwirken lässt, welche grenzflächenaktive Äquilibrierungskatalysatoren für Organosiloxane, welche in der Lage sind, Siloxanbindungen zu spalten und wieder zu schließen, in Mengen von 0,2 bis 5 Gew.-%, bezogen auf die wässrige Zubereitung, enthalten. Mit diesem Verfahren ist es möglich, unter möglichst schonenden Bedingungen Silokonimprägnierungen von der Oberfläche von Fasern, Garnen oder flächigen textilen Materialien zu entfernen. Die so behandelten textilen Materialien können dann wieder ein Benetzungsverhalten wie vor der Imprägnierung aufweisen, um sie gegebenenfalls weiteren Behandlungen, zum Beispiel einer neuen oder nuancierenden Einfärbung zu unterziehen.

Das in der DE 35 15 077 C1 beschriebene Verfahren stößt jedoch dort an seine Grenzen, wo dicke Schichten von Silikon hoher Vernetzung und Dichte entfernt werden müssen. Insbesondere in der Produktion/Konfektion von Airbags für die Fahrzeugindustrie werden derart beschichtete textile Materialien verwendet, deren hochvernetzte, klebefreie Beschichtung erforderlich ist, um die beim Auslösen des Airbags auftretenden Explosionsgase zurückzuhalten und ein Aufblasen des Airbags zu ermöglichen. Für die Gewebebeschichtung, insbesondere für die Airbagausrüstung, werden üblicherweise Flüssigsiliconkautschuke eingesetzt, die als 2-Komponentensysteme aus einem Methylhydrogensiloxan als Vernetzer und einem Vinyl-Gruppen enthaltenden Siliconpolymer bestehen, die unter der Katalyse von Pt(0)-Komplexen mittels einer Hydrosilylierungsreaktion vulkanisieren. Die beiden Komponenten werden vermischt und mittels eines geeigneten Auftragsverfahren beispielsweise mit einem Walzenrakel in einer dünnen Schicht auf das Gewebe aufgebracht. Die Vulkanisation des Siliconkautschuks erfolgt bei Temperaturen von 130 - 170°C, wobei oftmals bei 200°C nachgetempert wird.

Bei sehr glatten und dichten Geweben aus Polyamid oder anderen Synthesefasern ist die Haftung der Beschichtungsmasse nicht optimal, so dass oftmals eine Grundierung mit geeigneten Organosilanen zur Haftverbesserung notwendig wird.

Durch die mittlerweile flächendeckende Versorgung mit Airbags und das wachsende Aufkommen von Abfällen aus der Airbagproduktion/Geweberesten aus der Airbagkonfektion sowie gebrauchten Airbags aus dem Verschrottungsprozess von Kraftfahrzeugen ergibt sich die Notwendigkeit eines Verfahrens zur Aufarbeitung und Widerverwertung der eingesetzten Rohstoffe, hier des eingesetzten Fasermaterials und der eingesetzten Silikone. Beispielsweise fallen derzeit allein in Großbritannien pro Jahr 4.000 t aus Airbags bzw. der Airbagproduktion stammenden Silikonbeschichteten Geweben an, für die nach dem Stand der Technik kein brauchbares Recyclingverfahren zur Verfügung steht.

Überraschend wurde nun gefunden, dass eine Abwandlung des in der DE 35 15 077 C1 beschriebenen Verfahrens die gestellte Aufgabe löst. Demnach wird die Aufgabe erfindungsgemäß gelöst durch ein Verfahren zum Entfernen von auf Fasern, Garnen oder flächigen textilen Materialien (Substrate) befindlichen Silikonen, bei dem man eine wässrige Zubereitung auf die Substrate einwirken lässt und dann die so behandelten Substrate zur Entfernung der Silikonreste spült, dadurch gekennzeichnet, dass die Zubereitung 0,5 bis 10 Gew.-% grenzflächenaktiver, quaternärer Ammoniumverbindungen sowie 0,5 bis 5 Gew.-% Alkalihydroxid, jeweils bezogen auf die wässrige Zubereitung, enthält.

Während des Einwirkens der wässrigen Zubereitung auf die Substrate wird das vulkanisierte Silikon äquilibriert, wodurch eine Trennung des Silikons von dem Fasermaterial und eine separate Aufarbeitung ermöglicht werden. Anders als in den offenbarten Beispielen der DE 35 15 077 C1, in der allenfalls die Anwesenheit von 0,3 Gew.-% einer 30 %igen Natronlauge in der verwendeten Zubereitung offenbart wird, ist für die vorliegende Erfindung wesentlich, dass die Zubereitung mindestens 0,5 Gew.-% Alkalihydroxid, bezogen auf die wässrige Zubereitung enthält.

Besonders vorteilhaft kann das Verfahren ausgeführt werden, wenn die wässrige Zubereitung 1,3 bis 3,0 Gew.-%, insbesondere 1,5 bis 2,5 Gew.-% grenzflächenaktiver, quaternärer Ammoniumverbindungen enthält und/oder 0,8 bis 3,5 Gew.-%, insbesondere 1,5 bis 2,5 Gew.-% Alkalihydroxid enthält. In den angegebenen engen Konzentrationsbereichen kann die Silikonbeschichtung besonders effizient und kostengünstig entfernt und der Wiederverwertung zugeführt werden. Insbesondere ist hervorzuheben, dass der enge bevorzugte Konzentrationsbereich für grenzflächenaktive quaternäre Ammoniumverbindungen deutlich über den konkret offenbarten Konzentrationen der DE 35 15 077 C1 liegt und die mit dem vorliegenden Verfahren erzielte Effizienz der Trennung der Substrate von den Silikonresten daher völlig unerwartet und überraschend ist.

Die bei dem erfindungsgemäßen Verfahren zu verwendenden quaternären Ammoniumverbindungen als Äquilibrierungskatalysatoren sind noch insofern besonders ausgewählt, als sie grenzflächenaktive Eigenschaften aufweisen müssen. Sie sollen insbesondere in maximal 1%iger Lösung die Oberflächenspannung des Wassers auf einen Wert ≤ 50 mN . m⁻¹ erniedrigen.

Die grenzflächenaktiven quaternären Ammoniumverbindungen sind besonders bevorzugt: Stearyldimethylbenzylammoniumhydroxid, Distearyldimethylammoniumhydroxid, Tricaprylmethylammoniumhydroxid, Didecyldimethylammoniumchlorid, Cocosalkyldimethylpentylammoniumchlorid und/oder Cocosalkyltrimethylammoniumchlorid. Besonders vorteilhaft führt man das erfindungsgemäße Verfahren derart aus, dass man die wässrige Zubereitung bei gegenüber Raumtemperatur erhöhter Temperatur, insbesondere bei Temperaturen oberhalb von 95 °C, ganz besonders bei mindestens 100 °C auf die Substrate einwirken lässt und/oder man die Einwirkungszeit insbesondere im Bereich von 30 bis 240, ganz besonders 90 bis 150 Minuten einstellt.

Auf diese Weise wird in besonders effizienter Weise erreicht, dass das vulkanisierte Silikon äquilibriert wird, wodurch es mit der wässrigen Zubereitung von dem Fasermaterial getrennt und beides separat aufgearbeitet werden kann.

Vorzugsweise verwendet man wässrige Zubereitungen, die weiterhin Hilfslösungsmittel, Netzmittel und/oder Dispergiermittel und gegebenenfalls auch waschaktive Substanzen enthalten.

Die Löslichkeit der grenzflächenaktiven Äquilibrierungskatalysatoren nimmt mit steigender Kohlenstoffanzahl der Alkyl-, Aryl- oder Alkylarylreste ab. Um die Katalysatoren dennoch in der wässrigen Zubereitung lösen oder zumindest feindispers verteilen zu können, kann es deshalb erforderlich sein, der wässrigen Zubereitung Hilfslösungsmittel oder Dispergiermittel zuzusetzen.

Beispiele solcher Hilfslösemittel sind niedere, wasserlösliche Alkohole, oder Glykole insbesondere 1,2 Propandiol oder Butyldiglykol. Als Netzoder Dispergiermittel sind wasserlösliche Anlagerungsprodukte des Ethylenoxids an Fettalkohole, an Oxoalkohole mit 10 - 18 C-Atomen oder auch polyoxyalkylenmodifizierte Siloxane geeignet.

Mitunter genügt jedoch bereits die in den Zubereitungen meist enthaltene waschaktive Substanz oder das in der Zubereitung enthaltene Netzmittel, um die Katalysatoren in der wässrigen Zubereitung zu dispergieren. Es ist auch möglich, den Gehalt an waschaktiver Substanz oder Netzmittel zu erhöhen, um die gewünschte Solubilisierung oder Feinverteilung zu erhalten.

Ein besonderer Vorteil des erfindungsgemäßen Verfahren ist allerdings, dass es völlig emulgatorfrei, d.h. im wesentlichen frei von zugesetzten Emulgatoren durchgeführt werden kann. Dies ist auch insofern wünschenswert, als eine rasche Phasentrennung die Aufarbeitung der von der Silikonbeschichtung getrennten faserhaltigen Materialien sowie des Silikons in der wässrigen Lösung erleichtert.

Das erfindungsgemäße Verfahren eignet sich in besonderer Weise zur Entfernung von vernetzten, insbesondere hochvernetzten Silikonpolymeren, ganz besonders von vulkanisierten Flüssigsilikonkautschukpolymeren.

Optimale Verwertbarkeit der wiedergewonnen Rohstoffe ergibt sich, wenn man nach der Einwirkungszeit die Zubereitung von dem Substrat trennt und beides separat aufarbeitet. Insbesondere Substrate, die Polyamidfasern enthalten, hierunter ganz besonders bevorzugt solche, die im Wesentlichen aus Polyamidfasern bestehen, können mit dem erfindungsgemäßen Verfahren erstmalig von hochvernetzten Silikonpolymeren getrennt werden und sind auf diese Weise der Wiederverwertung zugänglich.

Daher betrifft die Erfindung in einer besonderen Ausgestaltung ein erfindungsgemäßes Verfahren, das dadurch gekennzeichnet ist, dass die Substrate von Airbags oder von beschichteten Geweberesten aus der Airbagkonfektion stammen.

Das Verfahren dient damit bevorzugt der Wiedergewinnung und Wiederverwertung von Fasermaterial, insbesondere Polyamidfasern und Silikonen.

Zum Ablösen der Silikone von den textilen Materialien werden die textilen Materialien in die wässrige Zubereitung gegeben und in dieser bei Temperaturen von 20 °C oder höher bewegt. Die Obergrenze der Temperatur ist dabei im wesentlichen durch die Temperaturbelastbarkeit des textilen Materials gegeben. Das Verfahren kann dabei in Waschmaschinen, die in der Textilindustrie üblich sind, beispielsweise sogenannten Trommelwaschmaschinen, durchgeführt werden.

Nach der Einwirkung der wässrigen Zubereitung und deren Abpumpen muss das textile Material gründlich gespült werden, um die Zubereitung und die in ihr verteilten Silikonreste völlig zu entfernen.

In den folgenden Beispielen wird das erfindungsgemäße Verfahren näher gezeigt und ein Vergleich mit einem Verfahren des Standes der Technik durchgeführt.

Verfahrensbeispiele:

### Beispiel 1 (erfindungsgemäß)

In einer druckbeständigen Trommelwaschmaschine z.B. von der Fa. Flainox Typ "Universal HT" wurden 100 kg silikonbeschichtetes Polyamidgewebe aus der Airbagkonfektion mit einer Silikonauflage von 55g/m² mit 900 kg einer Zubereitung von 1,0% Didecyldimethylammoniumchlorid, 1,0% Distearyldimethylammoniumchlorid, 2,0% 1,2 Propandiol und 2,0% Natriumhydroxid bei 135°C 120 Minuten lang behandelt.

Nach dieser Zeit wurde der Trommelinhalt auf ca. 40°C abgekühlt und die Zubereitung in einen Ölabscheider abgelassen.

Das von der Silikonbeschichtung befreite Polyamidgewebe wurde einmal mit 900 kg kaltem Wasser ein weiteres Mal mit 900 kg kaltem Wasser unter Zusatz von 5,0% Essigsäure bei 50°C gespült, dann geschleudert und auf einem Bandtrockner getrocknet.

Die wässrige Zubereitung wurde in dem Ölabscheider von dem mittelviskosen Silikonöl befreit und für den nächsten Abziehprozess genutzt.

Das vom Silikon befreite Polyamidgewebe wurde aufgeschmolzen und pelletiert und dem Wertstoffkreislauf wieder zugeführt. Das abgetrennte Silikonöl wurde bei einem Silikonproduzenten gereinigt und als Rohstoff in verschiedene Synthesen oder Kompounds mitverwendet.

Das Auswägen des abgetrennten Silikonöls ergab, dass sich durch das erfindungsgemäße Verfahren 99,5% der aufgebrachten Silikonbeschichtung von dem Polyamidgewebe entfernen ließen.

### Vergleichsbeispiel 2 (nicht erfindungsgemäß)

In einer druckbeständigen Trommelwaschmaschine z.B. von der Fa. Flainox Typ "Universal HT" wurden 100 kg silikonbeschichtetes Polyamidgewebe aus der Airbagkonfektion mit einer Silikonauflage von 55g/m² mit 900 kg einer Zubereitung von 2,0% 1,2 Propandiol und 2,0% Natriumhydroxid bei 135°C 120 Minuten lang behandelt.

Nach dieser Zeit wurde der Trommelinhalt auf ca. 40°C abgekühlt und die Zubereitung in einen Ölabscheider abgelassen.

Das behandelte Polyamidgewebe wurde einmal mit 900 kg kaltem Wasser ein weiteres Mal mit 900 kg kaltem Wasser unter Zusatz von 5,0% Essigsäure bei 50°C gespült, dann geschleudert und auf einem Bandtrockner getrocknet.

Die wässrige Zubereitung zeigte in dem Ölabscheider nur kleine Mengen der abgelösten aber nicht äquilibrierten Silikonbeschichtung.

Das behandelte Polyamidgewebe war noch großflächig mit der weitgehend intakten Silikonbeschichtung versehen, so dass eine Wiederverwertung der einzelnen Wertstoffe nicht möglich war.

### Vergleichsbeispiel 3 entsprechend DE 35 15 077 C1 (nicht erfindungsgemäß)

In einer druckbeständigen Trommelwaschmaschine z.B. von der Fa. Flainox Typ "Universal HT" werden 100 kg silikonbeschichtetes Polyamidgewebe aus der Airbagkonfektion mit einer Silikonauflage von 55g/m² mit 900 kg einer Zubereitung von 1,0% Cocosalkyldimethylbenzylammoniumchlorid, 0,2% Cocosalkyltrimethylammoniumchlorid, 0,2% Tricaprylmethylammoniumchlorid, 0,2% Distearyldimethylammoniumchlorid, 0,6% nichtionogenem Waschmittel auf der Basis i-Tridecanolpolyglykolether und PEO-Sorbitanmonolaurat und 0,2% Natriumhydroxid bei 95°C 120 Minuten lang behandelt.

Nach dieser Zeit wurde der Trommelinhalt auf ca. 40°C abgekühlt und die Zubereitung in einen Ölabscheider abgelassen.

Das behandelte Polyamidgewebe wurde einmal mit 900 kg kaltem Wasser ein weiteres Mal mit 900 kg kaltem Wasser unter Zusatz von 5,0% Essigsäure bei 50°C gespült, dann geschleudert und auf einem Bandtrockner getrocknet.

Die wässrige Zubereitung zeigte in dem Ölabscheider nur kleine Mengen der abgelösten aber nicht äquilibrierten Silikonbeschichtung.

Das behandelte Polyamidgewebe war noch weitgehend mit der intakten Silikonbeschichtung versehen, so dass eine Wiederverwertung der einzelnen Wertstoffe nicht möglich war.

## Patentansprüche

1. Verfahren zum Entfernen von auf Fasern, Garnen oder flächigen textilen Materialien (Substrate) befindlichen Silikonen, bei dem man eine wässrige Zubereitung auf die Substrate einwirken lässt und dann die so behandelten Substrate zur Entfernung der Silikonreste spült, **dadurch gekennzeichnet, dass** die Zubereitung 0,5 bis 10 Gew.-% grenzflächenaktiver, quaternärer Ammoniumverbindungen sowie 0,5 bis 5 Gew.-% Alkalihydroxid, jeweils bezogen auf die wässrige Zubereitung, enthält.

2. Verfahren gemäß Anspruch 1, **dadurch gekennzeichnet, dass** die wässrige Zubereitung 1,3 bis 3,0, insbesondere 1,5 bis 2,5 Gew.-% grenzflächenaktiver, quaternärer Ammoniumverbindungen enthält.

3. Verfahren gemäß Anspruch 1 oder 2, **dadurch gekennzeichnet, dass** die wässrige Zubereitung 0,8 bis 3,5, insbesondere 1,5 bis 2,5 Gew.-% Alkalihydroxid enthält.

4. Verfahren gemäß einem der Ansprüche 1 bis 3, **dadurch gekennzeichnet, dass** man die wässrige Zubereitung bei gegenüber Raumtemperatur erhöhter Temperatur, insbesondere bei Temperaturen oberhalb von 95 °C, ganz besonders bei mindestens 100 °C auf die Substrate einwirken lässt und/oder man die Einwirkungszeit insbesondere im Bereich von 30 bis 240, ganz besonders 90 bis 150 Minuten einstellt.

5. Verfahren gemäß einem der Ansprüche 1 bis 4, **dadurch gekennzeichnet, dass** die wässrige Zubereitung weiterhin Hilfslösemittel, Netzmittel und/oder Dispergiermittel enthält.

6. Verfahren gemäß einem der Ansprüche 1 bis 5, **dadurch gekennzeichnet, dass** die wässrige Zubereitung im wesentlichen frei von Emulgatoren ist.

7. Verfahren gemäß einem der Ansprüche 1 bis 6 zum Entfernen von auf Substraten befindlichen vernetzten Silikonpolymeren, insbesondere von vulkanisierten Flüssigsilikonkautschukpolymeren.

8. Verfahren gemäß einem der Ansprüche 1 bis 7, **dadurch gekennzeichnet, dass** man nach einer Einwirkungszeit die wässrige Zubereitung von dem Substrat trennt und beides separat aufarbeitet.

9. Verfahren nach einem der Ansprüche 1 bis 8, **dadurch gekennzeichnet, dass** die Substrate Polyamidfasern enthalten, insbesondere im wesentlichen aus Polyamidfasern bestehen.

10. Verfahren nach einem der Ansprüche 1 bis 9, **dadurch gekennzeichnet, dass** die Substrate von Airbags oder von beschichteten Geweberesten aus der Airbagkonfektion stammen.

11. Verfahren nach einem der Ansprüche 1 bis 10 zur Wiedergewinnung und Wiederverwertung von Fasern.

## Claims

1. A process for removing silicones present on fibers, yarns or textile sheet materials (substrates) wherein an aqueous preparation is allowed to act on the substrates, and then the thus treated substrates are rinsed to remove the residual silicone, **characterized in that** said preparation contains from 0.5 to 10% by weight of surface-active quaternary ammonium compounds and from 0.5 to 5% by weight of alkali hydroxide, respectively based on the aqueous preparation.

2. The process according to claim 1, **characterized in that** said aqueous preparation contains from 1.3 to 3.0% by weight, especially from 1.5 to 2.5% by weight, of surface-active quaternary ammonium compounds.

3. The process according to claim 1 or 2, **characterized in that** said aqueous preparation contains from 0.8 to 3.5% by weight, especially from 1.5 to 2.5% by weight, of alkali hydroxide.

4. The process according to any of claims 1 to 3, **characterized in that** said aqueous preparation is allowed to act on the substrates at a temperature that is increased with respect to room temperature, especially at temperatures of above 95 °C, more particularly at 100 °C at least, and/or the time of action is set within a range of from 30 to 240 minutes, more particularly from 90 to 150 minutes.

5. The process according to any of claims 1 to 4, **characterized in that** said aqueous preparation further contains cosolvents, wetting agents and/or dispersing agents.

6. The process according to any of claims 1 to 5, **characterized in that** said aqueous preparation is substantially free from emulsifiers.

7. The process according to any of claims 1 to 6 for removing cross-linked silicone polymers present on substrates, especially vulcanized liquid silicone rubber polymers.

8. The process according to any of claims 1 to 7, **characterized in that** said aqueous preparation is separated from the substrate after a time of action and both are processed separately.

9. The process according to any of claims 1 to 8, **characterized in that** said substrates contain polyamide fibers and, in particular, essentially consist of polyamide fibers.

10. The process according to any of claims 1 to 9, **characterized in that** the substrates are derived from airbags or coated fabric scraps from the readymaking of airbags.

11. The process according to any of claims 1 to 10 for the recovery and recycling of fibers.

## Revendications

1. Procédé pour éliminer les silicones présents sur des fibres, des fils ou des matériaux en feuille textiles (substrats), dans lequel on fait agir une formulation aqueuse sur les substrats et ensuite on rince les substrats ainsi traités pour éliminer les résidus de silicones, **caractérisé en ce que** la formulation contient de 0,5 à 10 % en poids de composés ammonium quaternaires tensioactifs, et de 0,5 à 5 % en poids d'un hydroxyde alcalin, respectivement par rapport à la formulation aqueuse.

2. Procédé selon la revendication 1, **caractérisé en ce que** la formulation aqueuse contient de 1,3 à 3,0 % en poids, particulièrement de 1,5 à 2,5 % en poids, de composés ammonium quaternaires tensioactifs.

3. Procédé selon la revendication 1 ou 2, **caractérisé en ce que** la formulation aqueuse contient de 0,8 à 3,5 % en poids, particulièrement de 1,5 à 2,5 % en poids, d'un hydroxyde alcalin.

4. Procédé selon l'une quelconque des revendications 1 à 3, **caractérisé en ce que** l'on fait agir la formulation aqueuse sur les substrats à une température élevée par rapport à la température ambiante, particulièrement à des températures supérieures à 95 °C, plus particulièrement à 100 °C au moins, et/ou l'on ajuste le temps d'exposition particulièrement dans la gamme de 30 à 240, plus particulièrement de 90 à 150, minutes.

5. Procédé selon l'une quelconque des revendications 1 à 4, **caractérisé en ce que** la formulation aqueuse contient en outre des cosolvants, des agents mouillants et/ou des dispersants.

6. Procédé selon l'une quelconque des revendications 1 à 5, **caractérisé en ce que** la formulation aqueuse est sensiblement exempte d'émulsifiants.

7. Procédé selon l'une quelconque des revendications 1 à 6 pour éliminer les polymères de silicone réticulés présents sur des substrats, particulièrement les polymères caoutchouc de silicone liquides vulcanisés.

8. Procédé selon l'une quelconque des revendications 1 à 7, **caractérisé en ce que** l'on sépare la formulation aqueuse du substrat après un certain temps d'exposition et que l'on traite les deux séparément.

9. Procédé selon l'une quelconque des revendications 1 à 8, **caractérisé en ce que** les substrats contiennent des fibres de polyamide, particulièrement qu'ils consistent essentiellement en fibres de polyamide.

10. Procédé selon l'une quelconque des revendications 1 à 9, **caractérisé en ce que** les substrats proviennent de sacs gonflables ou de résidus de tissus enduits de la fabrication de sacs gonflables.

11. Procédé selon l'une quelconque des revendications 1 à 10 pour la récupération et la réutilisation des fibres.
